# EUROPEAN PATENT SPECIFICATION

(11) **EP 2 038 452 B1**
(45) Date of publication and mention of the grant of the patent: **18.05.2016**
(21) Application number: 07768622.8
(22) Date of filing: 05.07.2007
(51) Int. Cl.: C23F 17/00, C25D 1/00, C25D 1/10, C25D 11/02, C25D 11/04, C25D 11/24

(54) **Method for fabricating superhydrophobic surface**
Verfahren zur Herstellung einer superhydrophoben Oberfläche
Procédé destiné à la fabrication d'une surface superhydrophobe

(30) Priority: 05.07.2006 KR 20060063101
(43) Date of publication of application: 25.03.2009
(73) Proprietor: Postech Academy-Industry- Foundation, Pohang-city, Kyungsangbuk-do 790-784 (KR)
(72) Inventor: HWANG, Woon-Bong, Gyungsangbuk-do 790-751 (KR); LEE, Kun-Hong, Gyungsangbuk-do 790-751 (KR); PARK, Hyun-Chul, Gyungsangbuk-do 790-751 (KR); KIM, Dong-Hyun, Seoul 132-041 (KR); KIM, Joon-Won, Gyungsangbuk-do 790-751 (KR)
(74) Representative: Modiano, Micaela Nadia
(86) International application number: PCT/KR2007/003276
(87) International publication number: WO 2008/004828

(56) References cited:
- JP-A- 10 278 277
- JP-A- 56 004 430
- KR-A- 20040 089 268
- KR-A- 20060 052 327
- MEIHUA JIN ET AL: "Super-Hydrophobic PDMS Surface with Ultra-Low Adhesive Force", MACROMOLECULAR RAPID COMMUNICATIONS, vol. 26, no. 22, 14 November 2005 (2005-11-14), pages 1805-1809, XP55036529, ISSN: 1022-1336, DOI: 10.1002/marc.200500458
- ZHANG: "Replica molding of high-aspect-ratio polymeric nanopillar arrays with high fidelity", LANGMUIR, vol. 22, no. 20, 1 January 2006 (2006-01-01), page 8595, XP55036536, ISSN: 0743-7463, DOI: 10.1021/la061372
- VOROBYOVA A I ET AL: "Study of pillar microstructure formation with anodic oxides", THIN SOLID FILMS, ELSEVIER-SEQUOIA S.A. LAUSANNE, CH, vol. 324, no. 1-2, 1 July 1998 (1998-07-01), pages 1-10, XP004147793, ISSN: 0040-6090, DOI: 10.1016/S0040-6090(97)01194-2
- CHAOWEI GUO ET AL: "Large-Area Fabrication of a Nanostructure-Induced Hydrophobic Surface from a Hydrophilic Polymer", CHEMPHYSCHEM, vol. 5, no. 5, 17 May 2004 (2004-05-17), pages 750-753, XP55036534, ISSN: 1439-4235, DOI: 10.1002/cphc.200400013

## Description

### BACKGROUND OF THE INVENTION

### (a) Field of the Invention

The present invention relates to a method of processing a superhydrophobic surface. More particularly, the present invention relates to a surface processing method using a surface treatment of a metal body and a replication process.

### (b) Description of the Related Art

Generally, a surface of a solid body formed of metal or polymer has inherent surface energy. The inherent surface energy is represented as a contact angle between liquid and a surface of a solid body when the liquid contacts the surface of the solid body. When the contact angle is less than 90 °, a spherical drop of liquid loses its shape to change into hydrophilicity wetting the surface of the solid body. When the contact angle is greater than 90 °, the spherical drop maintains its spherical shape to have hydrophobicity that does not wet the solid body but easily flows. The hydrophobicity of the drop can be noted from a case where a drop of water falling on a lotus leaf does not wet the lotus leaf but flows along a surface of the leaf.

Meanwhile, the inherent contact angle of the surface of the solid body may be varied by processing the surface such that the surface has protrusions and depressions. That is, the hydrophilicity of the surface having the contact angle less than 90 ° may be further enhanced through a surface treatment process. Likewise, the hydrophobicity of the surface having the contact angle greater than 90 ° may be also further enhanced through the surface treatment process. The hydrophobicity surface of the solid body may be used for a variety of following applications. That is, the hydrophobicity surface can be applied to a condenser of an air conditioning system to enhance the condensing efficiency. When the hydrophobicity surface is applied to a drink can, the residue can be completely removed from the can and thus the recycling process of the can may be simplified. Further, when the hydrophobicity surface is applied to a window glass of a vehicle, it can prevent the window glass from being steamed up when there is a difference between an indoor temperature and an outdoor temperature. When the hydrophobicity surface is applied a ship, the ship can show a higher impellent force using the same power. Furthermore, when the hydrophobicity surface is applied to a dish antenna, it can prevent snow from covering a surface of the dish antenna. When the hydrophobic surface is applied to a water supply pipe, the water flow rate can be improved.

However, a technology for varying the contact angle of the surface of the solid body in response to a specific purpose has been depending on a microelectromechanical system (MEMS) process applying a semiconductor fabrication technology. Therefore, this technology is generally used for a method for forming micro- or nano-scaled protrusions and depressions on the surface of the solid body. The MEMS process is an advanced mechanical engineering technology applying the semiconductor technology. However, the apparatus used for the semiconductor process is very expensive.

In order to form the nano-scaled protrusions and depressions on a surface of a solid metal body, a variety of processes, which cannot be performed under a normal working environment, such as a process for oxidizing the metal surface, a process for applying a constant temperature and a constant voltage, and a process for oxidizing and etching using a special solution, must be performed. That is, in order to such processes, a specifically designed clean room is required and a variety of expensive apparatus for performing the processes are necessary.

Furthermore, due to a limitation of the semiconductor process, a large surface cannot be processed at once. As described above, according to the conventional technology, the process is very complicated and it is difficult to mass-produce the products. Furthermore, the cost for producing the products is very high. Therefore, it is difficult to apply the conventional technology.

The above information disclosed in this Background section is only for enhancement of understanding of the background of the invention.

### SUMMARY OF THE INVENTION

Exemplary embodiments of the present invention provide a method for processing a superhydrophobic surface, which can reduce the processing cost by mass-produce-processing the hydrophobic surface through a simple process.

In an exemplary embodiment of the present invention, a method of processing a superhydrophobic surface includes i) orienting a spray nozzle of a particle sprayer toward a surface of a metal body, ii) operating the particle sprayer to forming micro-scale protrusions and depressions on the surface of the metal body by spraying particles to the surface of the metal body, iii) forming a plurality of nano-scale holes on the surface of the metal body by treating the metal body through an anodic oxidation process, iv) forming a replica by immersing the metal body in a non-wetting polymer material and solidifying the non-wetting polymer material, and v) forming a superhydrophobic dual-scale surface structure having nano-scale pillars formed on micro-scale protrusions and depressions by removing the metal body and an anodic oxide from the replica.

The diameter of the particle used for particle sprayer is in the range from 50µm to 180µm.

The diameter of the nano-scale hole is in the range from 35 nm to 200 nm.

The aspect ratio of the nano-scale hole may be in the range from 3 to 10, more preferably, in the range from 5 to 7.5.

The non-wetting polymer material may be selected from the group consisting of PTFE (Polytetrahluorethylene), FEP (Fluorinated ethylene propylene copoymer), PFA (Perfluoroalkoxy), and a combination thereof.

The metal body may be formed of an aluminum or aluminum alloy.

The particle sprayer may be a sand blaster spraying sand particles.

Alternatively, the particle sprayer may be designed to spray metal particles.

### BRIEF DESCRIPTION OF THE DRAWINGS

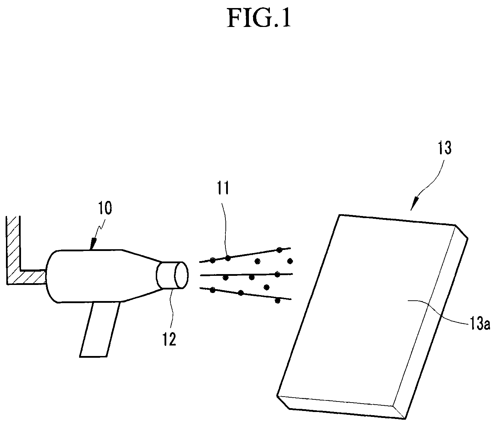

FIG. 1 is a schematic view of a particle sprayer of a hydrophobic surface processing apparatus according to an exemplary embodiment of the present invention.
FIG. 2 is a schematic view of a metal body having micro-scale protrusions and depressions.
FIG. 3 is a schematic diagram of an anodic oxidation apparatus, illustrating an anodic oxidation process.
FIG. 4 shows top plan view and sectional views illustrating a state before and after an anodic oxidation process is performed.
FIG. 5 is an scanning electron microscope (SEM) image of a surface of a metal body that is provided with nano-scale holes formed through an anodic oxidation process.
FIGS. 6A and 6b are SEM images of a solid body having a superhydrophobic surface that is formed using a sticking phenomenon by van der Waals' force.
FIG. 7 is a schematic view of a replication apparatus.
FIG. 8 is a sectional view taken along VI-VI of FIG. 7.
FIGS. 9A through 9D are views illustrating a method of processing a superhydrophobic surface.
FIGS. 10A and 10B are SEM images of a solid body having a superhydrophobic surface.
FIG. 11(a) is a SEM image representing a surface of the untreated normal industrial aluminum, FIG. 11(b) is a SEM image representing micro-scale protrusions and depressions of a sandblasted surface of aluminum, and FIG. 11(c) is a SEM image representing an anodized surface of porous anodic alumina after sandblasting.
FIG. 12 (a) is a SEM image of sandblasted PTFE replica, and FIG. 12(b) is a SEM image of superhydrophobic PTFE replica replicated from the anodic aluminum oxide template being anodized after sandblasting.
FIG. 13(a) is an image illustrating a contact angle 135° on a surface of PTFE replica being treated with sandblasting, and FIG. 13(b) is an image illustrating a contact angle 165° on a surface of PTFE replica being treated with anodization after sandblasting.

### DETAILED DESCRIPTION OF THE EMBODIMENTS

In the following detailed description, only certain exemplary embodiments of the present invention have been shown and described, simply by way of illustration.

In the present invention, "micro-scale" size is defined as a size in the range equal to or more than 1µm and less than 1000µm, and "nano-scale" size is defined as a size in the range equal to or more than 1nm and less than 1000nm.

A surface processing apparatus of a solid body includes a particle sprayer 10 for forming micro-scale protrusions and depressions on a surface of a metal body 13, an anodic oxidation apparatus 20 for performing an anodic oxidation process on the surface of the metal body 13, and a replication apparatus 30 for performing a replication process for forming a duplication corresponding to a surface shape of the metal body 13 by immersing the metal body 13 in a non-wetting material 32.

The particle sprayer 10 sprays particles 11 with a predetermined speed and pressure so that the particles 11 collide with the surface 13a of the metal body 13. The surface 13a of the metal body receives impact energy by the collision with the particles 11 and thus the surface 13a of the metal body 13 is deformed. The particle sprayer 10 may be, for example, a sand blaster spraying sand particles. Alternatively, the particle sprayer 10 may be designed to spray metal particles. The metal body may be provided in the form of a metal plate formed of aluminum, steel, copper, and the like. The diameter of the particle used for the particle sprayer 10 may be in the range from 50µm to 180µm. By operating the particle sprayer 10, micro-scale protrusions and depressions can be formed on the surface of the metal body 13.

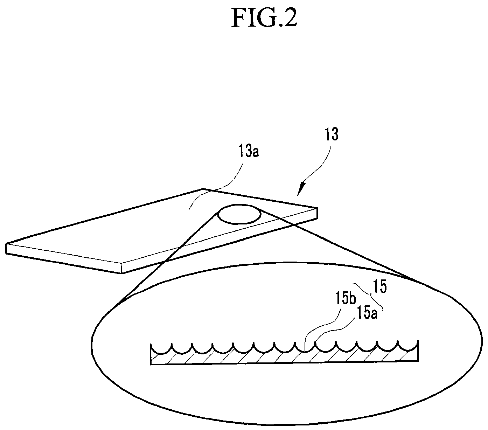

FIG. 2 is a perspective view of a metal body having a surface provided with micro-scale protrusions and depressions produced by the method of the present invention. In FIG. 2, a portion of the surface is enlarged and illustrated by a section.

Referring to FIG. 2, in the metal body having micro-scale protrusions 15a and depressions 15b, a height of each of the protrusions 15a, a depth of each of the depressions 15b, and a distance between the protrusions 15a, and the like may be varied in accordance with a particle spraying speed and pressure of the particle sprayer 10 and a size of the particle. These parameters may be preset properly.

Except for non-wetting materials, a normal solid such as metal or polymer is a wetting material having a contact angle of 90°. When a surface of the metal body is processed to have the protrusions 15a and depressions 15b according to a surface processing method of an exemplary embodiment of the present invention, the wettability of the metal body is further enhanced.

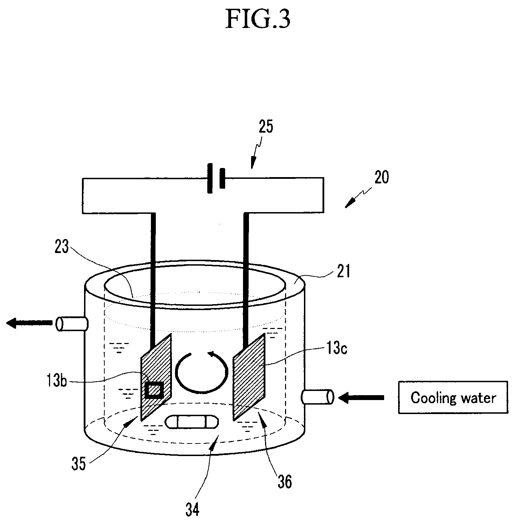

FIG. 3 is a schematic diagram of an anodic oxidation apparatus, illustrating an anodic oxidation process. Referring to FIG. 3, the anodic oxidation apparatus 20 includes a main body 21 provided with a receiving space for receiving the metal body 13, electrolyte solution 23 stored in the main body 21, and a power source 25 for supplying cathode and anode voltages to the metal body 13.

The electrolyte solution 23 is stored in a storing space of the main body 21. The metal body 13 is received in the storing space. In this exemplary embodiment, the metal body 13 is formed of a conductive material such as aluminum. In addition, a pair of the main bodies 13a and 13b are provided. For example, other conductive materials to which electric power can be applied may be used for the metal body. One of the metal bodies 13a and 13b is applied with the anode voltage from the power source 25 and the other is applied with the cathode voltage from the power source 25. By doing this, an anodic oxidation process for forming nanometer-sized holes on the surface of the metal body 13 is performed.

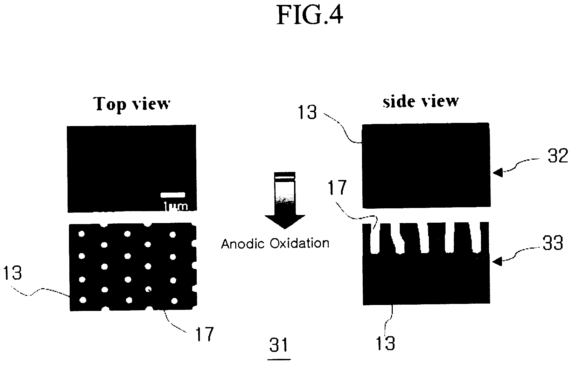

Describing the anodic oxidation process in more detail, the metal body 13 is immersed in the electrolyte solution 23 contained in the main body 21. Here, sulfuric acid, phosphoric acid or oxalic acid may be selectively used as the electrolyte solution 23 for the anodic oxidation process. Next, one of the solid bodies 13a and 13b is applied with the anode voltage from the power source 25 and the other is applied with the cathode voltage from the power source 25. Therefore, as shown in FIG. 4, an anode oxide portion 14 is formed on the surface of the metal body 10. When the metal body 13 is formed of aluminum, alumina that is an oxide layer is formed on the surface of the metal body 10. Nano-scale holes 17 each having a nano-scaled diameter are formed in the anodic oxide portion 13. The diameter and depth of the nano-scale hole 17 may be controlled by selecting the electrolyte solution and controlling the applied voltage used for anodizing process. The diameter of the nano-scale hole 17 may be in the range from 35 to 200 nm.

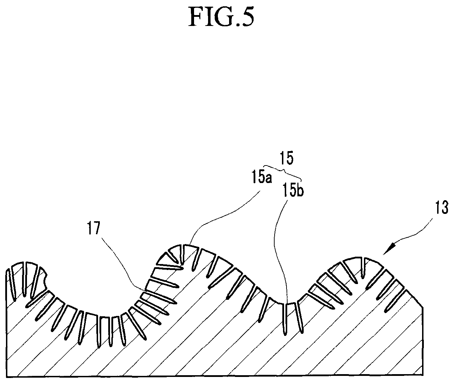

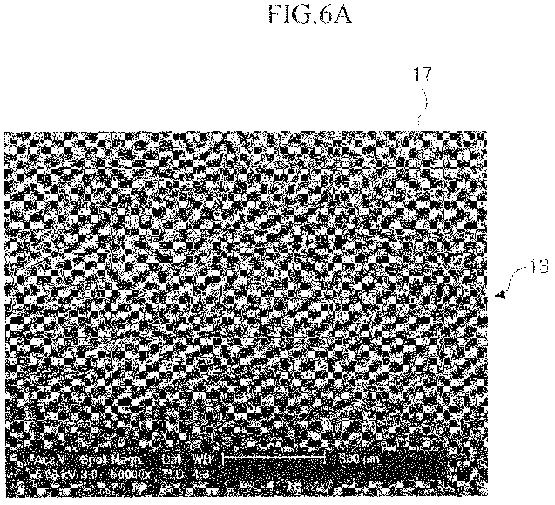

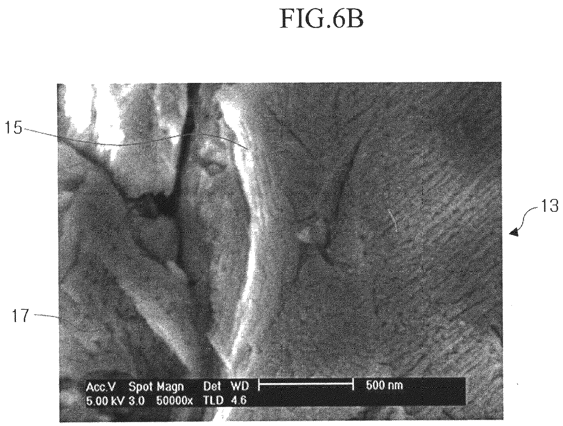

Therefore, as shown in FIG. 5, the surface of the metal body 13 is provided with the micro-scale protrusions 15a and depressions 15b that are formed through a process using the particle sprayer 10 as well as the holes 17 that are formed through the anodic oxidation process and have a nanometer-sized diameter. FIGS. 6A and 6B are SEM images of the surface of the metal body that is provided with the nano-scale holes that are formed through an anodic oxidation process. It can be noted from FIGS. 6A and 6B that the holes 17 each having a nanometer-sized diameter are formed in the surface of the metal body 13.

The metal body 13 that are processed by the particle sprayer and the anodic oxidation process are loaded in the replication apparatus 30.

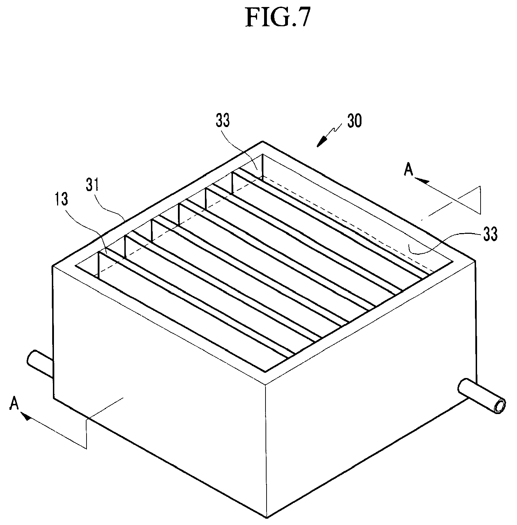

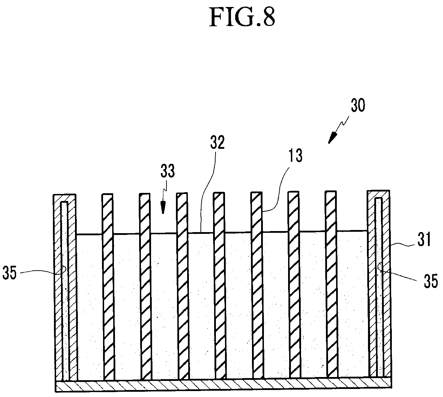

As shown in FIGS. 7 and 8, the replication apparatus includes a main body 31, a receiving portion 33 that is formed in the main body to receive the metal body 13 and non-wetting polymer solution 32, and a cooling unit 35 that is arranged along a side of the main body 31 to solidify the non-wetting polymer solution 32.

The metal body 13 and the non-wetting polymer solution 32 are received in the receiving portion 33. The non-wetting polymer solution 32 may be selected from the group consisting of polytetrahluorethylene (PTFE), fluorinated ethylene propylene copolymer (PEF), perfluoroalkoxy (PFA), and a combination thereof. The non-wetting polymer solution 32 is solidified to surround the metal body 13 in the receiving portion 33. In order to easily solidify the non-wetting polymer solution 32, cooling water flows along the cooling unit 35.

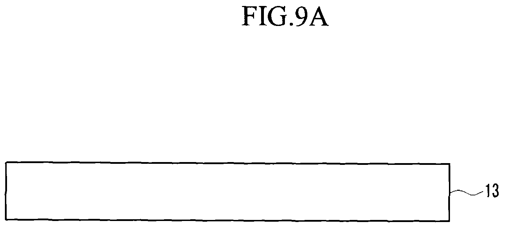

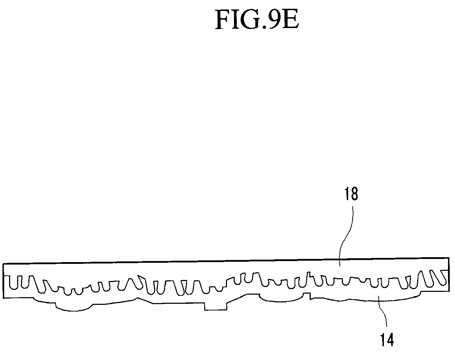

When the non-wetting polymer solution 32 is solidified, a hydrophobic polymer replica 18 is formed as shown in FIGS. 9A to 9F. That is, when the non-wetting polymer solution is solidified in a state where the metal body 13 is immersed therein, the hydrophobic polymer replica 18 having a shape corresponding to a shape of the surface of the metal body 13 can be formed. Next, the metal body 13 and the anodic oxide portion 14 are removed from the hydrophobic polymer replica 18. When the metal body 13 is formed of aluminum and thus the anodic oxide portion is the alumina, the metal body and the alumina can be removed through a wet-etching process. Accordingly, replication of a surface shape of the metal body 13 is realized on the surface of the hydrophobic polymer replica 18, thereby making it possible to form a polymer solid body 19 having a superhydrophobic surface with minimum wettability.

Therefore, the surface of the polymer solid body 19 is provided with micro-scale protrusions 15a and depressions 15b as well as a plurality of nano-scale pillars 19b each having a diameter identical to that of the nano-scale hole 17, such that the polymer solid body 19 has a surface of dual-scale structures.

The diameter of the nano-scale pillar 19b is in the range from 35 to 200 nm, since the diameter of the nano-scale hole 17 is in the range from 35 to 200 nm. Accordingly, the diameter ratio of micro-scale protrusions and depressions 15 to nano-scale pillars 19b formed on the surface of the solid body 19 is in the range from 250 to 5140, since the diameter of the particles sprayed from the particle sprayer 10. When the diameter ratio is less than 250, the micro-scale protrusions and depressions are unduly dominant over the nano-scale pillars such that dual-scale structure is not represented on the surface of the solid body. When the diameter ratio is more than 5140, the micro-scale protrusions and depressions and the nano-scale pillars become similar size such that dual-scale structure is not represented on the surface of the solid body.

The aspect ratio of the nano-scale hole 17 may be in the range from 3 to 10, more preferably, in the range from 5 to 7.5. The aspect ratio of the nano-scale hole 17 depends on the anodizing time. When the aspect ratio is less than 3, the characteristic of the nano-scale pillar replicated from the nano-scale hole 17 is weak and the micro-scale protrusions and depressions are unduly dominant over the nano-scale pillars such that dual-scale structure is not represented on the surface of the solid body. When the aspect ratio is more than 10, the nano-scale pillars are stuck to each other due to adhesive force by van der Waals' interaction thereby counterbalancing the characteristic of the micro-scale protrusions and depressions.

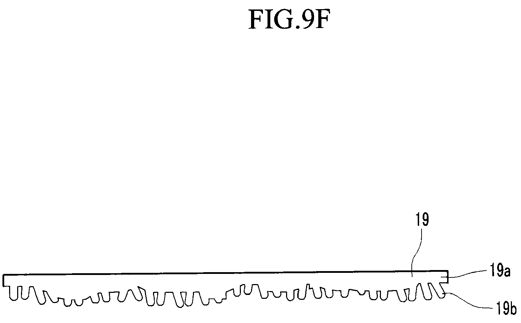

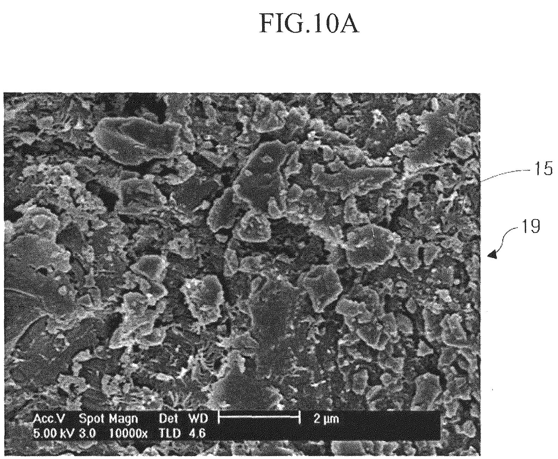

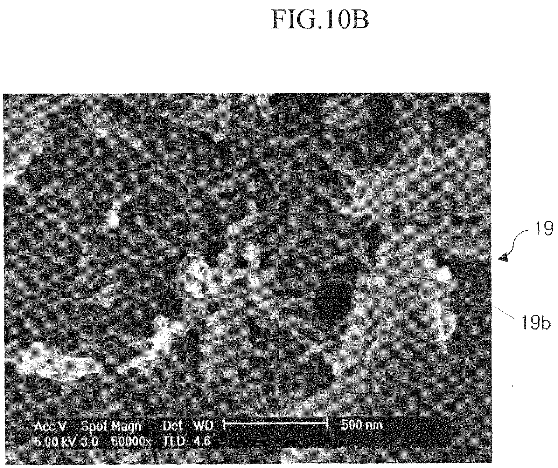

In more detail, as shown in FIG. 9F, the polymer solid body 19 includes a base 19a formed on at least partly the surface thereof and provided with the micro-scale protrusions and depressions. The protrusions 19b each having a nanometer-sized diameter are formed on the base. The protrusions 19b are formed of a non-wetting polymer material. The non-wetting polymer material may be selected from the group consisting of polytetrahluorethylene (PTFE), fluorinated ethylene propylene copolymer (PEP), perfluoroalkoxy (PFA), and a combination thereof. FIGS. 10A and 10B are SEM images of the solid body having the superhydrophobic surface.

FIGS. 9A through 9D are views illustrating a method of processing a replica according to an exemplary embodiment of the present invention.

The following will describe a method of processing a replica with reference to FIGS. 9A to 9F. Throughout the drawings, like reference numerals indicate like parts.

First, a spray nozzle 12 of the particle sprayer 10 is oriented toward the surface 13a of the metal body 13.

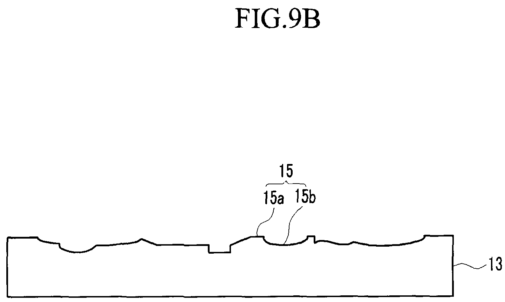

Next, the particle sprayer 10 is operated to spray the particles 11 to the surface of the metal body 13. Then, as shown in FIG. 9B, the micro-scale protrusions and depressions are formed on the surface of the metal body 13 as the particles 11 collide with the surface.

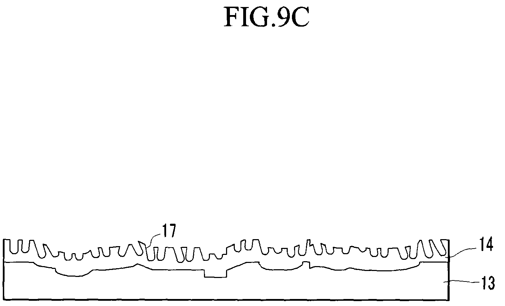

Next, as shown in FIG. 9C, the surface of the metal body 13 on which the micro-scale protrusions and depressions are formed is treated through an anodic oxidation process. By the anodic oxidation process, the nano-scale holes 17 are formed on the surface of the metal body 13. Therefore, the surface of the metal body 13 is provided with the micro-scale protrusions 15a and depressions 15b that are formed through a process using the particle sprayer 10 as well as the nano-scale holes 17 that are formed through the anodic oxidation process.

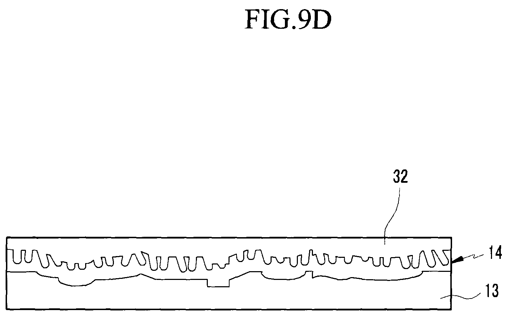

Next, as shown in FIG. 9D, the metal body 13 is immersed into the non-wetting material 32 and the non-wetting material 32 is solidified. As the non-wetting material 32 is solidified and changes to the hydrophobic polymer replica 18 is formed.

Finally, as shown in FIG. 9F, the metal body 13 and the anodic oxide portion 14 are removed from the hydrophobic polymer replica 18.

Therefore, the protrusions 19b each having a diameter identical to the nano-scale diameter of each of the holes 17 formed on the surface of the metal body 13 are formed on the surface of the hydrophobic polymer solid body 19. Therefore, the polymer solid body 19 having the superhydrophobic surface can be realized.

### [Experimental Example]

### Preparation of Treated A1 Surfaces and Replica

We began with industrial grade aluminum (99.5 %) sheets (50 mm x 40 mm x 1 mm). We prepared 500 mesh (i.e., 50 µm in diameter) sand particles. The sand particles are ejected from a nozzle using compressed air. The pressure of the compressed air is 6 kgf/cm² and the sandblasting step is reciprocated 20 times. After sand blasting, the aluminum sheet is cleaned for next process by dipping in acetone for ten minutes and rinsed with deionized water.

The next step is anodization, which was carried out in 0.3 M oxalic acid solution. The sandblasted aluminum sheet was used as the anode, and a flat platinum sheet as the cathode. The electrodes were about 5 cm apart. A potential difference of 40 V_{DC} was applied by a computer-interfaced power supply (Digital Electronics Co., DRP-92001DUS). The sandblasted aluminum sheet was anodized for 4 minutes. During anodization the solution was maintained at a temperature of 15° C by a circulator (Lab. Companion, RW-0525G).

The next step is the replication. The nano-scale honeycomb structure (anodic aluminum oxide, AAO) was used as the template material. To make a polymer replica, the dipping method was used with the mixed solution of PTFE (0.3 wt%) and the solvent, which comprises a solution of 6 wt% PTFE (Polytetrafluoroethylene, DuPont Teflon® AF: Amorphous Fluoropolymer Solution) in the solvent (ACROS, FC-75). The template was dipped into the mixed solution, and cured at room temperature. During the curing process, the solvent of the mixed solution was evaporated, and PTFE thin film remained.

The final step is removal of the nano-scale honeycombe template (AAO template). The aluminum layer was removed in HgCl₂ solution. Residual porous alumina was then removed in a mixture of 1.8 wt% chromic acid and 6 wt% phosphoric acid at 65 °C for 5 hours.

### Surface Characterization

The sessile drop method, which measures the contact angle (CA) of a water droplet on a surface, was used to characterize the wetting properties of the resulting micro/nanostructures. A surface analyzer, DSA-100 (Krüss Co.), was used for the measurement. Steady-state contact angles were measured using a 4 µL deionized water droplet. At least five different measurements were performed on different areas of each specimen at room temperature.

### Topography of the Treated A1 Surface and Replica

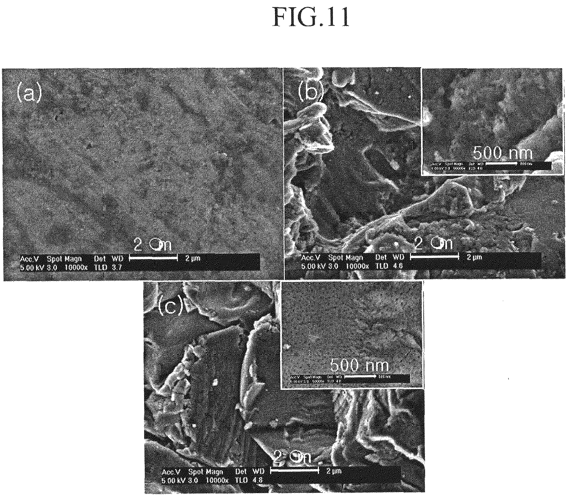

FIG. 11 (a) is a SEM image representing a surface of the untreated normal industrial aluminum, FIG. 11(b) is a SEM image representing micro-scale protrusions and depressions of a sandblasted surface of aluminum, and FIG. 11(c) is a SEM image representing an anodized surface of porous anodic alumina after sandblasting. Here, the anodizing was carried out at 40 V in a 0.3 M oxalic acid solution at 15°C for 4 minutes.

As shown in FIG. 11(c), the surface exhibits nano-scale hole (about 40 nm) structures with micro-scale random roughness on the alumina surface. The depth of the hole is about 350 nm, and the distance between the neighboring holes is 100 nm. This anodizing process altered the sandblasted aluminum surface to the porous alumina surface, which exhibits hierarchical structures, having nanostructures on microstructures.

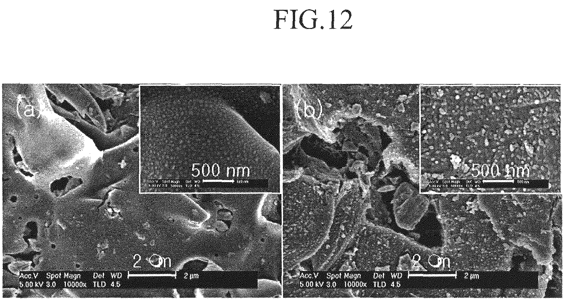

FIG. 12 (a) is a SEM image of sandblasted PTFE replica, and FIG. 12(b) is a SEM image of superhydrophobic PTFE replica replicated from the anodic aluminum oxide template being anodized after sandblasting. No nano-scale pillars exist in FIG. 12(a), but are present in FIG. 12 (b). The length of the pillars is about 300 nm.

### Wetting Properties

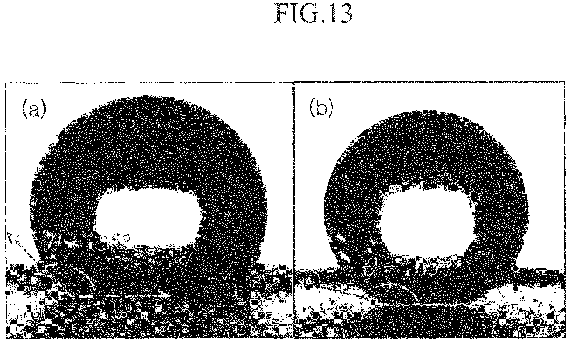

FIG. 13 shows measured values of the contact angle. The contact angle of the sandblasted PTFE replica surface is 135° , as shown in FIG. 13(a). The intrinsic contact angle of PTFE is 120° , so that the microscale roughness of the surface increases the hydrophobicity. The sandblasted porous alumina PTFE replica surface has a contact angle of 165° (FIG. 13(b)). These were average values of the measured contact angle. The errors were less than 2° .

The water droplets on these dual-scaled modified surfaces readily sit on the apex of the nanostructures, since air fills the space of the microstructures under a water droplet. A water droplet on these dual-scaled modified surfaces can not penetrate into the surface. We found that water droplets can not fix on the PTFE replica surface stably. The nano-scale pillars dramatically reduce the contact area between the water droplet and the solid surface. This exhibits the superhydrophobic property.

## Claims

1. A method of processing a hydrophobic surface, comprising:
orienting a spray nozzle of a particle sprayer toward a surface of a metal body;
operating the particle sprayer to forming micro- scale protrusions and depressions on the surface of the metal body by spraying particles to the surface of the metal body;
forming a plurality of nano- scale holes on the surface of the metal body by treating the metal body though an anodic oxidation process;
forming a replica by immersing the metal body in a non- wetting polymer material and solidifying the non-wetting polymer material; and
forming a superhydrophobic dual- scaled surface structure having nano-scale pillars formed on micro- scale protrusions and depressions by removing the metal body and an anode oxide from the replica.

2. The method of claim 1, the diameter of the particle used for particle sprayer is in the range from 50µm to 180µm.

3. The method of claim 1, wherein the non-wetting polymer material is selected from the group consisting of PTFE (Polytetrafluorethylene), FEP (Fluorinated ethylene propylene copolymer), PFA (Perfluoroalkoxy), and a combination thereof.

4. The method of claim 1, wherein the metal body is formed of aluminium or an aluminium alloy.

5. The method of claim 1, wherein the particle sprayer is a sand blaster spraying sand particles.

6. The method of claim 1, wherein the particle sprayer is designed to spray metal particles.

## Patentansprüche

1. Ein Verfahren zur Bearbeitung einer hydrophoben Oberfläche, das Folgendes umfasst:
Ausrichten einer Sprühdüse eines Partikel-Sprühgeräts auf eine Oberfläche eines Metallkörpers hin;
Betätigen des Partikel-Sprühgeräts, um durch Sprühen von Partikeln auf die Oberfläche des Metallkörpers Erhebungen und
Vertiefungen im Mikromaßstab auf der Oberfläche des Metallkörpers zu bilden;
Formen einer Vielzahl von Löchern im Nanomaßstab auf der Oberfläche des Metallkörpers durch Behandeln des Metallkörpers durch ein anodisches Oxidationsverfahren;
Formen eines Abdrucks durch Eintauchen des Metallkörpers in ein nicht netzendes Polymermaterial und Erstarren des nicht netzenden Polymermaterials; und
Bilden einer superhydrophoben Oberflächenstruktur mit zweifachem Maßstab mit Holmen im Nanomaßstab gebildet auf Erhebungen und Vertiefungen im Mikromaßstab, durch Entfernen des Metallkörpers und eines Anodenoxids von dem Abdruck.

2. Das Verfahren gemäß Anspruch 1; der Durchmesser des Partikels, der für das Partikel-Sprühgerät verwendet wird, liegt im Bereich von 50µm bis 180µm.

3. Das Verfahren gemäß Anspruch 1, worin das nicht netzende Polymermaterial gewählt ist aus der Gruppe bestehend aus PTFE (Polytetrafluorethylen), FEP (Fluoriertem Ethylen-Propylen-Copolymer), PFA (Perfluoralkoxy) und einer Kombination daraus.

4. Das Verfahren gemäß Anspruch 1, worin der Metallkörper aus Aluminium oder einer Aluminiumlegierung geformt ist.

5. Das Verfahren gemäß Anspruch 1, worin das Partikel-Sprühgerät ein Sandstrahlgerät ist, das Sandpartikel versprüht.

6. Das Verfahren gemäß Anspruch 1, worin das Partikel-Sprühgerät konstruiert ist, um Metallpartikel zu versprühen.

## Revendications

1. Procédé de préparation d'une surface hydrophobe, comportant les étapes suivantes :
- diriger une buse de projection d'un appareil de projection de particules vers une surface d'un corps métallique ;
- faire fonctionner l'appareil de projection de particules pour former, à la surface du corps métallique, des bosses et des creux à l'échelle micrométrique, par projection de particules sur la surface du corps métallique ;
- former de multiples trous à l'échelle nanométrique sur la surface du corps métallique, en faisant subir au corps métallique un traitement d'oxydation anodique ;
- former une réplique par immersion du corps métallique dans un matériau polymère non-mouillant et solidification de ce matériau polymère non-mouillant ;
- et former une structure de surface super-hydrophobe à double échelle, comportant des nano-piliers formés sur les micro-bosses et micro-creux, en séparant de la réplique le corps métallique et l'oxyde d'anodisation.

2. Procédé conforme à la revendication 1, dans lequel les particules utilisées dans l'appareil de projection de particules ont de 50 µm à 180 µm de diamètre.

3. Procédé conforme à la revendication 1, dans lequel le matériau polymère non-mouillant est choisi dans l'ensemble constitué par les PTFE (polytétrafluoroéthylène), FEP (copolymères fluorés d'éthylène et de propylène) et PFA (perfluoroalcoxy-alcanes), ainsi que leurs combinaisons.

4. Procédé conforme à la revendication 1, dans lequel le corps métallique est en aluminium ou en un alliage d'aluminium.

5. Procédé conforme à la revendication 1, dans lequel l'appareil de projection de particules est une sableuse qui projette des particules de sable.

6. Procédé conforme à la revendication 1, dans lequel l'appareil de projection de particules est conçu pour projeter des particules métalliques.
